# EUROPÄISCHE PATENTSCHRIFT

(11) **EP 4 359 324 B1**
(45) Veröffentlichungstag und Bekanntmachung des Hinweises auf die Patenterteilung: **04.06.2025**
(21) Anmeldenummer: 22726604.6
(22) Anmeldetag: 27.04.2022
(51) Int. Cl.: B65G 1/137, B65G 1/04

(54) **SYSTEM UND VERFAHREN ZUM KOMMISSIONIEREN VON FLATPACK-ARTIKELN**
SYSTEM AND METHOD FOR PICKING FLATPACK ARTICLES
SYSTÈME ET PROCÉDÉ DE PRÉLÈVEMENT D'ARTICLES PLATS

(30) Priorität: 25.06.2021 DE 102021116485
(43) Veröffentlichungstag der Anmeldung: 01.05.2024
(73) Patentinhaber: SSI Schäfer Automation GmbH (DE), 97232 Giebelstadt (DE)
(72) Erfinder: LANGENBACH, Tim, 59439 Holzwickede (DE); SCHELLINGER, Markus, 97082 Würzburg (DE)
(74) Vertreter: Witte, Weller & Partner Patentanwälte mbB
(86) Internationale Anmeldenummer: PCT/EP2022/061270
(87) Internationale Veröffentlichungsnummer: WO 2022/268381

(56) Entgegenhaltungen:
- DE-A1- 10 119 679
- US-A1- 2018 178 992

## Beschreibung

Die vorliegende Offenbarung betrifft allgemein ein intralogistisches System und Verfahren zum automatisierten Kommissionieren von Artikeln, insbesondere von Flatpack-Artikeln. Vorzugsweise erfolgt die Kommissionierung vollautomatisiert. Quellen und Ziele der Kommissionierung werden durch palettenartige Ladungsträger repräsentiert.

Es gibt viele verschiedene automatisierte Kommissioniersysteme, die für die unterschiedlichsten Zwecke und Randbedingungen eingesetzt werden.

Die EP 1 462 393 B1 beschreibt ein vollautomatisiertes System, bei dem Artikel von artikelreinen Wareneingangspaletten auf Einzeltablare vereinzelt werden, so dass auf jedem Tablar immer nur ein Artikel sitzt. Die Wareneingangspaletten werden in einem Hochregallager bevorratet und zur Schaffung eines Kommissionierpuffers (Tablarlager) depalletiert. Artikel, die zur Abarbeitung eines Kommissionier-Auftrags benötigt werden, werden aus dem Tablarlager auf den Tablaren sitzend ausgelagert und kurz vor einer Packmaschine, nach einer Sequenzierung, vom Tablar getrennt. Die Packmaschine setzt die Artikel gemäß einem vorab bestimmten Packmuster auf eine Zielpalette um. Das System der EP 1 462 393 B1 wird insbesondere von Lebensmittelfilialisten eingesetzt. Dies bedeutet, dass das beschriebene System in Distributionszentren eingesetzt wird, wo üblicherweise Zielpaletten für eine Filiale des Lebensmittelhändlers zusammengestellt werden. Eine direkte Kommissionierung der Artikel von den Lagerpaletten auf die Zielpaletten ist nicht angedacht, insbesondere weil die Lagermaschinen im Hochregallager nicht ausreichend viele Wechselspiele durchführen können.

Des Weiteren sind Kommissioniersysteme im Umfeld des Getränkegroßhandels bekannt, wo Portalroboter zur vollautomatisierten Kommissionierung von Getränkekisten eingesetzt werden. Ein derartiges System ist in dem YouTube-Video "Bau-Projektverlauf Automatisiertes Handelslager Getränke" (www.youtube.com/watch?v=3OvSIMfit3k) gezeigt. Auch in diesem System werden die Artikel vorab von Quellpaletten vereinzelt und zu Türmen aufgeschichtet. Ein Einzeltablarlager wird ebenfalls eingesetzt. Die Quellpaletten werden mittels eines weiteren Portalroboters lagen- oder zeilenweise depalletiert, um dem Kommissionier-Portalroboter einzeln mittels Abstandsbildung auf einem Rollenförderer zugeführt zu werden. Der Kommissionierportalroboter stapelt die Einzelartikel anschließend wieder und setzt die Stapel auf die Zielpalette. Der Durchsatz (kommissionierte Artikel/Zeiteinheit) ist gering. Eine direkte Kommissionierung der Artikel (Getränkekisten) von den Quellpaletten herunter auf die Zielpaletten ist nicht möglich.

Die oben diskutierten Systeme sind ferner grundsätzlich nicht dazu geeignet, FlatpackArtikel zu kommissionieren.

Das Dokument DE 298 18 293 U1 eine Flaschenbehandlungsvorrichtung zum Lagern und Palettieren von leeren PET-Flaschen.

Die US 2018/178992 A1 offenbart ein System zum Kommissionieren von Artikeln. Das System weist ein Regal auf, das sich entlang einer Längs- und Höhenrichtung erstreckt und das eine Vielzahl von Lagerplätzen besitzt, um Quellcontainer zu lagern. Ferner weist es einen Gelenkarmroboter mit Manipulationseinheit auf, der eingerichtet ist, die Artikel umzusetzen. Ebenso weist es eine Packposition, die zur Pufferung eines Zielcontainers eingerichtet ist, eine Vielzahl von Förderern und eine Steuerung auf. Für jeden Auftrag ist ein auftragsspezifisches Packmuster bestimmt, um durch den Gelenkarmroboter mehrere der Artikel gemäß dem jeweiligen Auftrag von einem oder mehreren der Quellcontainer automatisiert in einen Zielcontainer in der Packposition zu packen. Jeder der Förderer weist eine Aufnahmeposition nahe dem Regal und eine Abgabeposition innerhalb eines Aktionsraums des Gelenkarmroboters auf, der auch die Packposition enthält.

Es ist daher eine Aufgabe, ein verbessertes System und Verfahren zum Kommissionieren von Artikeln, insbesondere von Flatpack-Artikeln, bereitzustellen.

Diese Aufgabe wird gelöst durch ein System zum Kommissionieren nach Anspruch 1.

Bevorzugte Ausführungen des Systems werden in den Ansprüchen 2-18 definiert.

Der Portalroboter wird direkt aus dem Regal heraus mit solchen Quellpaletten versorgt, die der Portalroboter zum Kommissionieren benötigt. Die Transportwege sind kurz. Die Transportzeiten sind kurz. Die Kommissionierleistung ist hoch. Die Kommissionierung benötigter Einzelteile erfolgt direkt von der Quellpalette herunter. Das System ist vollautomatisiert, so dass auch schwere und unhandliche Artikel kommissioniert werden können.

Die Quellpaletten werden mittels der Förderer durch das Regal "getunnelt". Die Quellpaletten werden auf direktem und kurzem Weg zur Kommissionierzone gebracht.

Der Flächenbedarf ist gering. Auf ein komplex verzweigtes Fördertechnik-Netzwerk zwischen einem Lagerbereich und einem Kommissionierbereich kann verzichtet werden. Die Depalettierung und Palettierung erfolgt am gleichen Ort, d.h. zwischen der Depalettierung und der Palettierung ist ebenfalls kein Fördertechnik-Netzwerk erforderlich.

Auf ein zusätzliches Kommissionierlager, das aus dem Palettenlager mit vereinzelten Artikel gespeist wird, kann verzichtet werden. Dennoch kann ein Piece- bzw. Case-Picking-Konzept angewendet werden, bei dem Paletten die (einzigen) Quellen der Kommissionierung darstellen.

Insbesondere eignet sich das System zur Kommissionierung von Flatpack-Artikeln. Flatpackartikel sind flach, groß und schwer und eigenen sich somit nicht für ein Kommissionierkonzept, das mit einem Kommissionierpuffer zwischen dem Palettenlager und der Kommissionierzone arbeitet. Die Kommissionierung der Flatpack-Artikel erfolgt vollautomatisiert, so dass die ergonomischen Herausforderungen entfallen, die durch einen Einsatz von Menschen bei einer manuellen Kommissionierung entstehen können.

Das vorliegende Kommissionierkonzept eignet sich besonders gut für E-Commerce-Anwendungen in den Möbelindustrie. Die Möbelstücke werden in Einzelteilen als "Flatpacks" auf Quellpaletten (sorten-, typen- bzw. artikelrein) bevorratet und gemäß Konzepten kommissioniert, wie sie aus der klassischen Behälterkommissionierung (Ware-zur-Person) bekannt sind. Der E-Commerce zeichnet sich dadurch aus, dass sehr viele Kunden Aufträge platzieren, die jeweils nur wenige Auftragszeilen umfassen. Dies bedeutet, dass das System mit einer sehr großen Anzahl von kleinen (wenige verschiedene Artikel, insbesondere in jeweils kleinen Stückzahlen; d.h. wenige Auftragszeilen pro Auftrag) Bestellungen konfrontiert ist, was eigentlich gegen eine Kommissionierung direkt von einer Quellpalette herunter spricht.

Ferner können Bestandsanlagen durch einfache Maßnahmen um- bzw. nachgerüstet werden. Die Förderer können ohne viel Aufwand in bestehende Regale eingebaut werden, insbesondere in einer untersten Ebene. Anschließend können der oder die Portalroboter direkt seitlich neben dem Regal platziert werden. Die Versorgung der Kommissionierzellen, die durch die Portalroboter definiert werden, mit Zielpaletten kann z.B. durch Unstetigförderer, wie z.B. Verschiebewägen, zwangsgeführte oder autonom fahrbare, fahrerlose Transportfahrzeuge und Ähnliches erfolgen, die die fertigen Zielpaletten dann auch in eine Versandzone transportieren können.

Ein Regal mit mindestens zwei Regalebenen reicht bereits aus, um die Förderer ins Regal integrieren zu können. Dies bedeutet, dass Bestandsanlagen nachrüstbar sind, die relativ niedrige Palettenlager umfassen.

Der materialflusstechnische Knotenpunkt eines jeden Regals, nämlich der Stirnbereich bzw. die Regalgassenenden, werden entlastet, weil der durch die Kommissionierung hervorgerufene Materialfluss durch die Längsseite des Regals hindurch erfolgt, während die Versorgung des Regals mit Nachschub sowie die Entsorgung geleerter Ladungsträger weiterhin - wie klassisch üblich - über die Stirnseite des Regals bzw. über die Regalgassenenden erfolgt.

Vorzugsweise grenzt der Portalroboter im Wesentlichen unmittelbar an eine Längsseite des Regals an.

Die im Wesentlichen abstandslose Anordnung des Portalroboters relativ zum Regal verkürzt die Transportwege und somit die Transportzeiten. Die Kommissionierleistung wird erhöht.

Ferner ist die Ankopplung an die Längsseite von Vorteil, weil dort sehr viele Förderer direkt nebeneinander angeordnet werden können.

Lange Transportwege von einer der Stirnseiten des Regals zu den Kommissionierplätzen, d.h. zu den Portalrobotern, entfallen. Der materialflusstechnische Flaschenhals an den kurzen Stirnseiten des Regals entfällt. Es können pro Zeiteinheit mehr Quellpaletten über die Längsseite als über die Stirnseite des Regals ausgelagert werden, weil mehr Übergabepunkte vorhanden sind.

Insbesondere sind die Förderer lineare Stetigförderer, die bidirektional betreibbar sind, die senkrecht, vorzugsweise horizontal senkrecht, zur Längsrichtung orientiert sind und die die Aufnahmepositionen und die Abgabepositionen an ihren jeweiligen Endabschnitten aufweisen.

Lineare Stetigförderer sind einfach zu steuern. Lineare Stetigförderer kommen ohne Weichen oder Abzweigungen aus. Sie haben eine hohe Transportleistung (Anzahl von Quellpaletten/Zeit).

Die Fähigkeit, die Förderer bidirektional zu betreiben, eröffnet die Möglichkeit, die Quellpaletten auf dem gleichen Weg wieder zurückzulagern.

Die senkrechte Orientierung der Förderer zur Längsrichtung des Systems, entlang der sich auch das Regal erstreckt, erhöht die Dichte bzw. Anzahl der Quellpaletten/Längenabschnitt, die dem Portalroboter angedient werden können. Dies erhöht die Leistung, weil mehr Zielpaletten pro Zeiteinheit kommissioniert werden können. Der Portalroboter muss nicht warten, bis die nächste Quellpalette angedient wird.

Weiter ist es von Vorteil, wenn das System ferner mindestens ein Regalbediengerät aufweist, das eingerichtet ist, die Quellpaletten automatisiert zwischen Lagerplätzen und den Aufnahmeplätzen auszutauschen, wobei das Regalbediengerät vorzugsweise an eine Längsseite des Regals angrenzt, die von dem Portalroboter abgewandt ist.

Die Regalbediengeräte sind Teil der Vollautomatisierung und ermöglichen ein automatisches Umsetzen der Quellpaletten im Bereich des Regals. Die Aufnahmeplätze liegen wie die Lagerplätze innerhalb des Regals und sind somit für das Regalbediengerät ohne Probleme zu erreichen.

Das Regalbediengerät wird vorzugsweise auf der dem Portalroboter gegenüberliegenden Längsseite des Regals eingesetzt, so dass die Förderer quer durch das Regal hindurchreichen, um die Portalroboter mit den Quellpaletten zu versorgen. Die Regalbediengeräte und die Portalroboter stören sich nicht. Die Regalbediengeräte und die Portalroboter sind räumlich getrennt, aber materialflusstechnisch dennoch - auf kürzestem Weg - direkt miteinander verbunden.

Vorzugsweise weist das System weitere Abgabepositionen auf, die ebenfalls innerhalb des Aktionsraums positioniert sind und die zur statischen Bereitstellung weiterer Quellpaletten eingerichtet sind.

Die statische Bereitstellung von Quellpaletten lässt eine Rücklagerung der Quellpaletten entfallen. Die statische Bereitstellung ist insbesondere für Artikel der Zugriffshäufigkeit A geeignet, weil diese Artikel sehr häufig in Kommissionier-Aufträgen auftreten. Die entsprechenden Quellpaletten leeren sich also schnell, so dass eine Rücklagerung unwirtschaftlich ist. Dynamisch bereitgestellte Quellpaletten gehören eher den Zugriffhäufigkeitskategorien B und C an. Hier kann eine Rücklagerung der entsprechenden Artikel durchaus sinnvoll sein.

Insbesondere sind zumindest einige, und vorzugsweise alle, der weiteren Abgabepositionen an einen Versorgungsförderer gekoppelt, der sich von den Förderern unterscheidet und der vorzugsweise einen Verschiebewagen umfasst.

Der Versorgungsförderer ist materialflusstechnisch an das Regal gekoppelt, vorzugsweise im Stirnbereich des Regals, wo die Regalbediengeräte Quellpaletten abgeben können.

Die materialflusstechnische Anbindung der dynamisch bereitgestellten Quellpaletten und der statisch bereitgestellten Quellpaletten ist getrennt und erfolgt durch unterschiedliche Fördertechniken. Die dynamische Bereitstellung erfolgt vorzugsweise durch Stetigförderer, wohingegen die statische Bereitstellung insbesondere durch Unstetigförderer erfolgen kann.

Vorzugsweise umfasst das System ferner einen Abführförderer, der sich vorzugsweise parallel zur Längsrichtung und mittig durch den Aktionsraum erstreckt.

Der Abführförderer kann eingesetzt werden, um Abfall, wie z.B. Zwischenlagen, aus dem Aktionsraum des Portalroboters zu entfernen, so dass der Portalroboter auf tiefer innerhalb der Quellpalette angeordnete Artikel zugreifen kann, die ansonsten verdeckt wären.

Insbesondere sind die Förderer auf einem Bodenniveau des Systems angeordnet.

Dadurch vereinfacht sich der Aufbau. Bühnenartige Gestelle entfallen. Die Förderer sind für Wartungstechniker gut zugänglich.

Vorzugsweise ist eine Ebene des Regals ausschließlich mit den Förderern versehen, wobei vorzugsweise mehrere der Portalroboter in der Längsrichtung unmittelbar benachbart zueinander angeordnet sind und wobei für jeden der Portalroboter zumindest eine eigene Packstation vorgesehen ist.

Die Packroboter werden nicht überlappend betrieben. Dies vereinfacht die Steuerung der Portalroboter. Die Portalroboter sind unabhängig voneinander betreibbar, insbesondere weil jeder Portalroboter die Artikel an eine eigene Packstation abgibt.

Weiter ist es von Vorteil, wenn ein Verhältnis zwischen einer Anzahl der Förderer und eine Anzahl der Lagerplätze entlang der Längsrichtung 1:2 oder2:3 beträgt.

Vorzugsweise ist der Portalroboter eingerichtet, innerhalb des Aktionsraums die Quellpaletten zu depalettieren sowie die Zielpaletten dort zu palettieren.

Insbesondere ist jeder der Artikel rechteckig plattenförmig; hat insbesondere Außenmaße in einem Bereich von 620 x 300 x 7 mm³ bis 2550 x 800 x 200 mm³; wiegt vorzugsweise maximal 62 kg; und/oder beinhaltet vorzugsweise geschichtete Einzelteile eines montagefertigen Möbelstücks.

Die Aufgabe wird des Weiteren durch ein Verfahren zum Kommissionieren von Artikeln gemäß Kommissionier-Aufträgen gelöst, das im Anspruch 19 definiert ist.

Bevorzugte Ausführungen des Verfahrens werden in den Ansprüchen 20 und 21 definiert.

Vorzugsweise weist das Umsetzen der Artikel auf: Aufnehmen der Artikel von den Quellpaletten an den Abgabepositionen; Bewegen der aufgenommenen Artikel an eine durch das Packmuster vorgegebene Position auf der Zielpalette; und Packen (durch Schichten) der aufgenommenen Artikel auf die Zielpalette gemäß dem jeweiligen Packmuster.

Insbesondere weist das Verfahren ferner auf: Bestimmen, mittels einer Steuerung oder eines Computers, das Packmuster für jeden Auftrag einschließlich der Quellpaletten, die solche der Artikel speichern, die zum Packen gemäß dem Packmuster auf die Zielpalette benötigt werden.

Ausführungsbeispiele der Erfindung sind in den Zeichnungen dargestellt und werden in der nachfolgenden Beschreibung näher erläutert. Es zeigen:
- Fig. 1: zeigt eine perspektivische Ansicht eines Kommissioniersystems gemäß einer ersten Ausführungsform;
- Fig. 2: zeigt eine perspektivische Ansicht (Fig. 2A) eines Portalroboters und ein Blockdiagramm (Fig. 2B) des Portalroboters;
- Fig. 3: zeigt eine Detailansicht einer Wareneingangszone des Kommissioniersystems der Fig. 1;
- Fig. 4: zeigt weitere Detailansichten des Kommissioniersystems der Fig. 1;
- Fig. 5: zeigt eine schematische Draufsicht auf eine zweite Ausführungsform des Kommissioniersystems;
- Fig. 6: zeigt eine Benutzerschnittstelle einer Planungssoftware (Fig. 6A) und eine fertig gepackt Zielpalette wie geplant (Fig. 6B, links) und wie tatsächlich gepackt (Fig. 6B, rechts); und
- Fig. 7: zeigt ein Flussdiagramm eines Kommissionierverfahrens.

Das hier vorgeschlagene System 10 kommt allgemein in einem intralogistischen Lagerund/oder Kommissionierumfeld, wie z.B. in einem Distributionszentrum, Versandzentrum oder in einer Filiale eines Einzelhändlers, insbesondere eines Möbelhändlers, zum Einsatz.

Die Intralogistik umfasst logistische Material- und Warenflüsse innerhalb eines Betriebsgeländes, insbesondere innerhalb eines Betriebsgebäudes. Der Begriff Intralogistik wurde definiert, um eine Abgrenzung zum Warentransport außerhalb des Betriebs zu schaffen, der z.B. durch eine Spedition erfolgt. Das "Forum Intralogistik" im "Verband Deutscher Maschinen- und Anlagenbauer" definiert den Begriff "Intralogistik" als die Organisation, Steuerung, Durchführung und Optimierung des innerbetrieblichen Warenund Materialflusses, der Informationsströme sowie des Warenumschlags in Industrie, Handel oder öffentlichen Einrichtungen.

Unter dem Begriff "Kommissionierung" versteht man das Zusammenstellen einer kundenspezifischen Bedarfsmenge aus einem Sortiment aus mehreren Artikeltypen. Die Kommissionierung beschreibt also eine Kommissionszusammenstellung für einen Kundenauftrag (kurz "Auftrag"), d.h. eine Entnahme von Teilmengen größerer Einheiten einzelner Artikel und deren Zusammenführung und Bereitstellung für einen Versand, oder eine Übergabe innerhalb einer Filiale, an den Kunden.

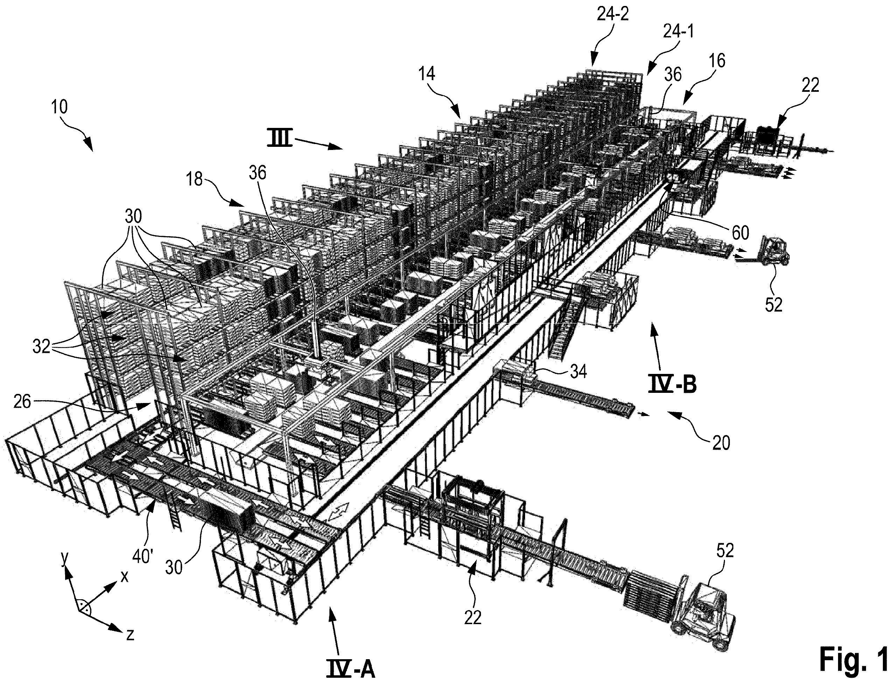

Fig. 1 zeigt eine perspektivische Ansicht einer ersten Ausführungsform eines Kommissioniersystems 10 für (hier nicht dargestellte Einzel-) Artikel 12, die gemäß Kunden- bzw. Kommissionieraufträgen aus einem Sortiment zu vereinzeln und ausgabeoder versandfertig zu machen sind. Die Artikel 12 weisen im Wesentlichen die Form eines rechtwinkligen Parallelepipeds auf.

Die vorliegende Entwicklung ist insbesondere mit Flatpack-Artikeln verwendbar, die eine spezielle Variante der oben erwähnten quaderförmigen Artikel 12 darstellen. Der Begriff "Flatpack" bezeichnet ein plattenartiges Paket, das üblicherweise eine Vielzahl von (flachen) montagefertigen Einzelteilen enthält, die später durch einen Endkunden nach einem Auspacken zu einem komplexen Objekt, wie z.B. einem Schrank, zusammengebaut werden können. Flatpack-Artikel zeichnen sich dadurch aus, dass eine Länge und eine Breite des Pakets um ein Vielfaches größer als eine Höhe des Pakets sind. FlatpackArtikel kommen insbesondere in der Möbelindustrie zum Einsatz. Flatpack-Artikel sind in der Regel schwer und stellen hinsichtlich deren Handhabung besondere ergonomische Anforderungen.

Im Nachfolgenden wird die vorliegende Entwicklung allgemein anhand von Artikeln 12 beschrieben, die in der Intralogistik als SKU ("stock keeping unit") oder VPE (Verpackungseinheiten) bezeichnet werden.

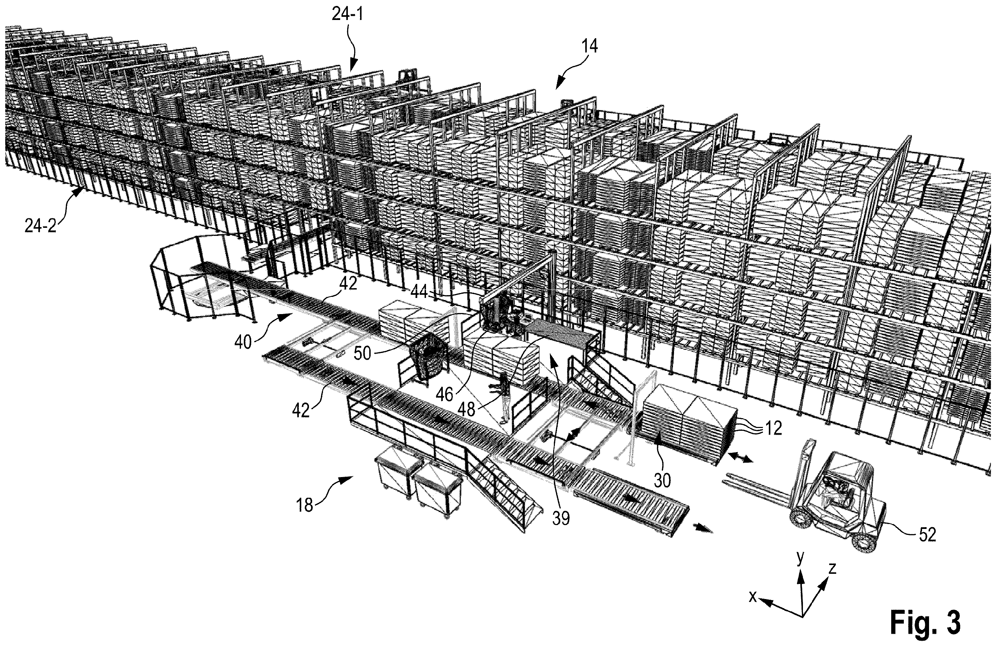

Das Kommissioniersystem 10, das nachfolgend auch nur kurz als "System 10" bezeichnet werden wird, umfasst eine Lagerzone 14 und eine Kommissionierzone 16. Ferner kann das System 10 eine Wareneingangszone 18 (in Fig. 1 verdeckt, weil hinter der Lagerzone 14 positioniert, siehe auch Fig. 3), eine Versandzone 20 sowie ein oder mehrere Puffer 22 für leere Zielpaletten 34 (nicht dargestellt) aufweisen.

Die Lagerzone 14 erstreckt sich im Wesentlichen parallel zu einer Längsrichtung X des Systems 10. Die Lagerzone 14 der Fig. 1 weist mindestens ein Regal 24, hier exemplarisch zwei Regale 24-1 und 24-2, auf, die parallel zur Längsrichtung X ausgerichtet sind und die eine Regalgasse 26 zwischen sich definieren, wo ein oder mehrere (hier nicht gezeigte) Regalbediengeräte (RBG) 28 zur automatisierten Ein- und Auslagerung von, vorzugsweise typenrein beladenen, Quellpaletten 30 betrieben werden. Die Lagerzone 14 der Fig. 1 wird z.B. mit zwei RBG 28 betrieben, die innerhalb der gleichen Regalgasse 26 simultan betrieben werden. Die Lagerzone 14 ist vorzugsweise durch eine Grundfläche der Regale 24 und der Regalgasse 26 definiert. Unter dem Begriff "Quellpalette 30" ist nachfolgend die Einheit aus den gelagerten Artikel 12 und dem Ladungsträger zu verstehen.

Allgemein sind Paletten Ladehilfsmittel bzw. Ladungsträger, die in unterschiedlichen Abmessungen existieren (Europalette, Düsseldorfer Palette, etc.) und die zur Bündelung, Lagerung und für den Transport größerer Mengen der Artikel 12 dienen. Paletten können aus unterschiedlichen Materialen (Karton, Holz, Metall, etc.) hergestellt werden. In der Möbelindustrie kommen oft auch besonders lange Paletten bzw. Langpaletten (2000 x 800 x 144 mm3) zum Einsatz.

Die Quellpaletten 30 können - je nach Abmessung - einfach tief oder mehrfach tief (in der Querrichtung Z) in Lagerplätzen 32 der Regale 24 gelagert werden. Vorzugsweise werden Europaletten benutzt. Jeder Lagerplatz 32 stellt ein Regalfach dar, das zur Aufnahme einer Palette eingerichtet ist. In einer einfachen Ausführung werden die Regalfächer durch die Längsträger, Querträger und/oder Regalsteher des Regals 24 definiert. Die Regalfächer können zur Aufnahme unterschiedlicher Palettentypen eingerichtet sein. Dies bedeutet, dass in dem Regal 24 Quellpaletten 30 mit unterschiedlichen Ladungsträgern gleichzeitig lagerbar sind.

In Fig. 1 umfasst jedes der Regale 24-1 und 24-2 exemplarisch vier Lagerebenen, die vertikal, d.h. in der Höhenrichtung Y, übereinander angeordnet sind. Die Lagerplätze 32 sind in der Längsrichtung X kontinuierlich nebeneinander und in der Höhenrichtung Y kontinuierlich übereinander angeordnet. Jedes Regal 24 weist mindestens zwei Ebenen auf, d.h. mindestens eine Ebene für die Lagerung der Quellpaletten 30 (Lagerebene) und mindestens eine vertikal beabstandete Fördertechnik-Ebene zur direkten Versorgung der Kommissionierzone 16 mit den Quellpaletten 30 auf einem kürzesten Weg. Die Lagerebenen weisen ausschließlich Lagerplätze 32 auf. Die Fördertechnik-Ebene weist vorzugsweise ausschließlich Fördertechnik - und somit keine Lagerplätze 32 zumindest entlang bzw. parallel der Kommissionierzone 16 - auf.

Es versteht sich, dass ein einziges Regal 24 ausreichen kann, um die Lagerzone 14 zu implementieren. In die Fig. 1 wäre dies das Regal 24-1, das unmittelbar an die Kommissionierzone 16 angrenzt. Die Lagerzone 14 kann ferner auch mehr als zwei Regale 24 aufweisen.

Die Kommissionierzone 16 wird im Wesentlichen durch einen oder mehrere Portalroboter 36 definiert. Eine Grundfläche der Kommissionierzone 16 entspricht im Wesentlichen einer Grundfläche des bzw. der Portalroboter 36. Die Fördertechnik-Ebene ist vorzugsweise mindestens genau so lang wie die Kommissionierzone 16. Dies bedeutet mit anderen Worten, dass sich weitere Regale bzw. Regalabschnitte (nicht gezeigt) in der Längsrichtung X an das Regal 24-1 anschließen könnten, die ohne eine FördertechnikEbene auskommen, insbesondere in der positiven X-Richtung.

Ferner versteht es sich, dass ein oder mehrere weitere Kommissionierzonen 16 (nicht gezeigt) vorgesehen werden können. Insbesondere kann sich eine weitere Kommissionierzone 16 (nicht gezeigt), z.B. spiegelsymmetrisch, an das Regal 24-2 anschließen. Diese weitere Kommissionierzone könnte für Aufträge reserviert sein, die direkt von den Kunden abgeholt werden, während die Kommissionierzone 16 am Regal 24-1 für den Versand reserviert ist (oder umgekehrt). Die weitere Kommissionierzone 16 am Regal 24-2 wäre nicht so lang wie die am Regal 24-1, weil die untere Regalebene des Regals 24-2 mit einem Versorgungsförderer belegt ist, der das zweite RBG 28 mit Quellpaletten (Nachschub) versorgt.

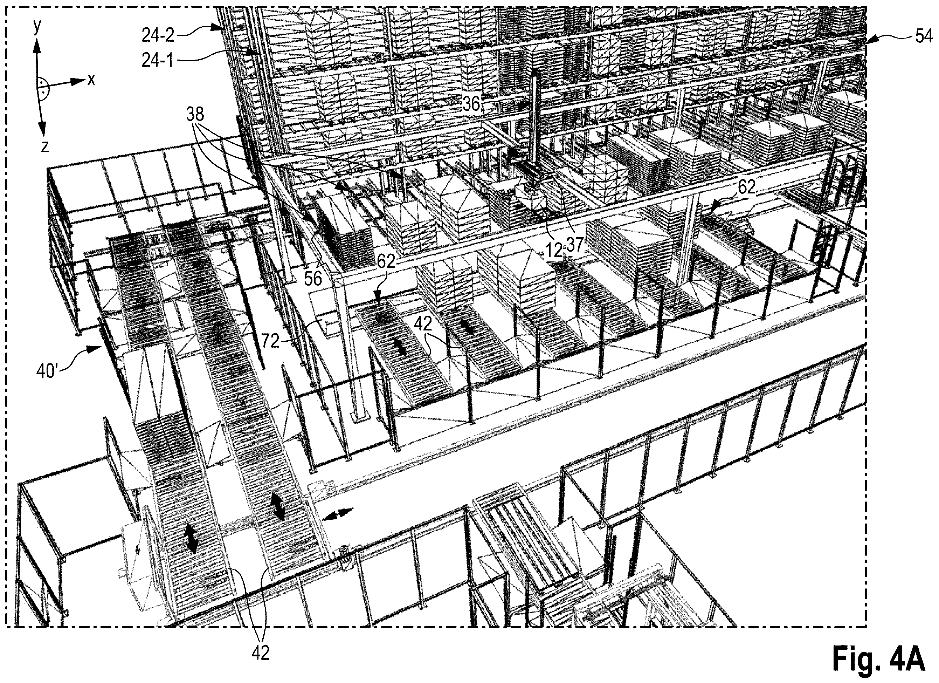

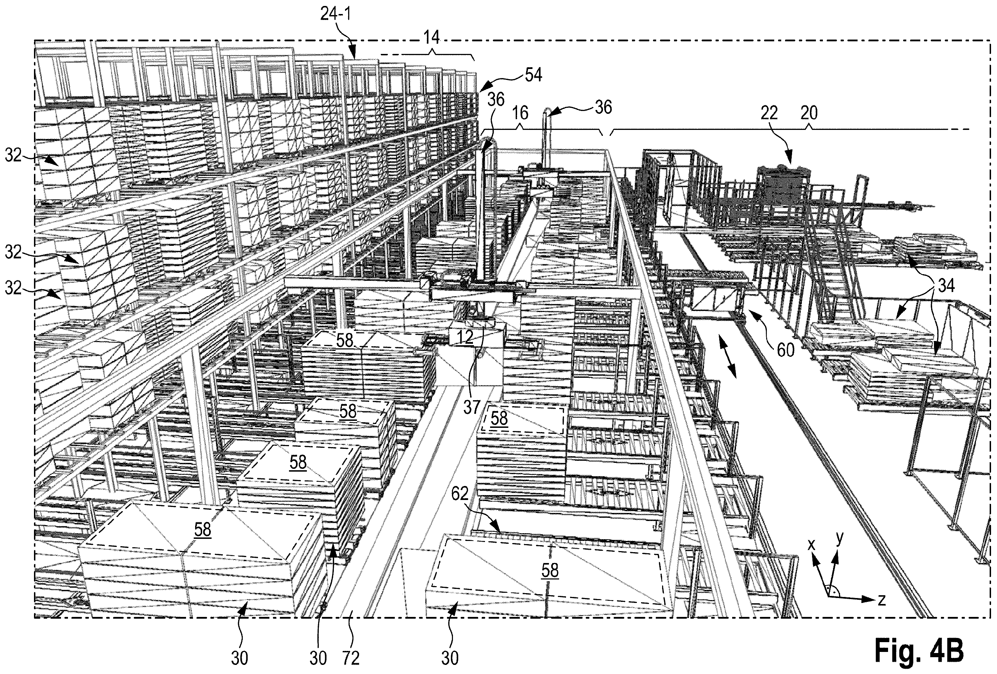

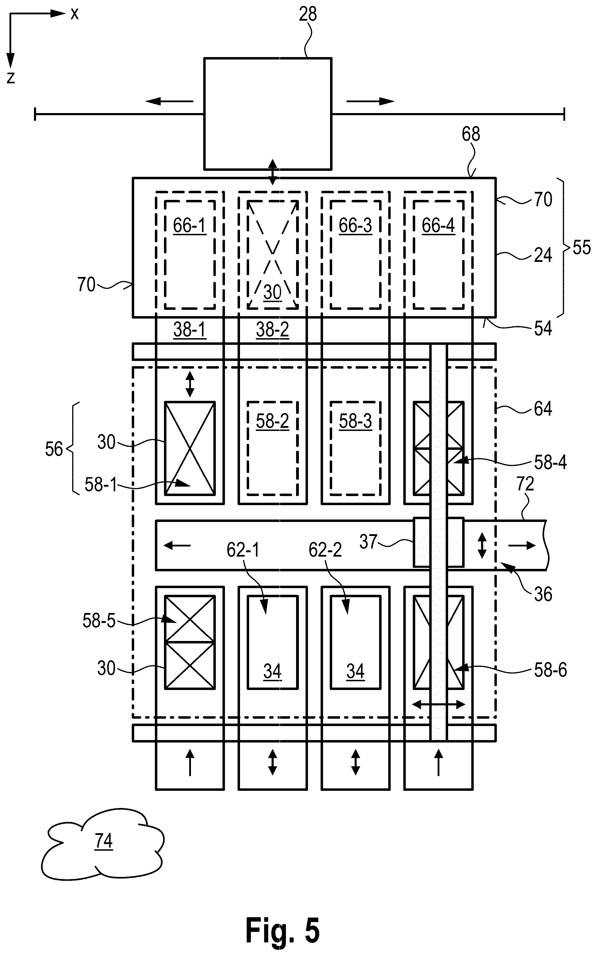

In der Kommissionierzone 16 werden die Quellpaletten 30 (automatisiert) mittels Förderern 38 (vgl. auch Fig. 4 und 5) bereitgestellt, um solche der Artikel 12 zu depalettieren, die zur Erzeugung eines Artikelstapels auf einer (hier nicht näher gezeigten) Zielpalette 34 gemäß einem Packmuster (und somit gemäß des zugehörigen Auftrags) benötigt werden. Die Zielpalette 34 umfasst einen Ladungsträger (Palette) und die auftragsspezifisch benötigten Artikel 12. Im Nachfolgenden wird nicht genauer zwischen dem Ladungsträger allein oder der Kombination aus Ladungsträger und Artikeln 12 unterschieden, weil die Zielpalette 34 zu Beginn eines Kommissioniervorgangs leer ist, also nur durch die Palette implementiert ist, und am Ende die auftragsspezifischen Artikel 12 enthält.

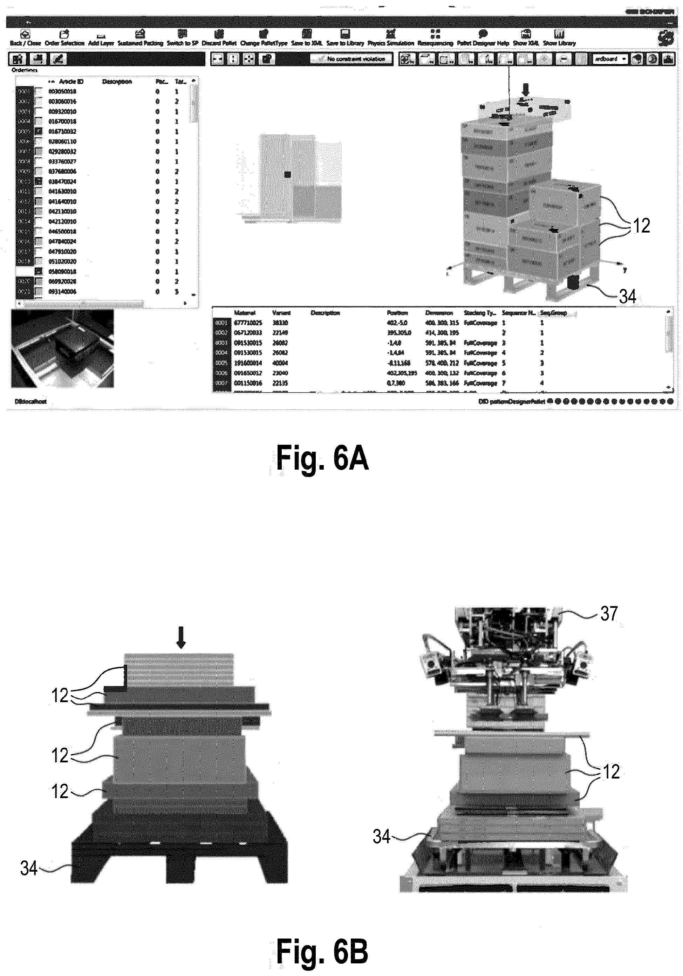

Die Bildung des (Artikel-)Stapels auf der Zielpalette 34 wird durch einen Packmustergenerator (Planungssoftware) in Form des Packmusters bestimmt und vorgegeben, um die Artikel 12 mittels einem der Portalroboter 36 auftragsspezifisch in - möglichst raumoptimierten, stabilen, sich gegenseitig stützenden - Schichten als Stapel auf die zugehörige Zielpalette 34 zu packen. Fig. 6A zeigt einen Ausschnitt einer Benutzerschnittstelle (GUI, "graphical user interface") der Planungssoftware, wobei in der rechten Spalte der Fig. 6A eine perspektivische Ansicht des (geplanten) Artikelstapels auf der Zielpalette 34 visualisiert ist, wobei in der mittleren Spalte der Fig. 6A eine halbtransparente Draufsicht auf den Stapel visualisiert ist und wobei in der linke Spalte der Fig. 6A eine Liste der benötigten Artikeltypen (Artikel-ID) und Stückzahlen (Auftragszeilen) sowie ein Foto eines aktuell bearbeiteten Artikels 12 veranschaulicht sind.

Links in der Fig. 6B ist eine fertig gepackte Zielpalette wie geplant und rechts wie tatsächlich gepackt gezeigt.

Die "Portalroboter 36" sind (Industrie-)Roboter, die an ein portalartiges Gestell (Portalgestell) gekoppelt sind, um ihre Manipulationseinheiten 37 (Endeffektoren) in einem jeweiligen rechtwinkligen Arbeitsraum zu bewegen, der durch drei translatorische (kartesische) Bewegungsachsen (XYZ) des jeweiligen Roboters aufgespannt wird. Im Allgemeinen sind die Roboter universell einsetzbare Bewegungsautomaten mit mehreren translatorischen und/oder rotatorischen Achsen. Die Bewegungen der Roboter sind in Bezug auf Bewegungsfolgen und Bewegungswege frei programmierbar und ggf. sensorgeführt. Die Roboter sind mit den Manipulationseinheiten 37 (vorzugsweise Vakuumhebern, die mittels Vakuum eine Oberseite der Artikel anhaften und die Artikel dann anheben, bewegen und dann wieder absetzen) ausgerüstet und können Handhabungsaufgaben (Umsetzen eines Artikels von Quellpalette 30 auf Zielpalette 34) ausführen.

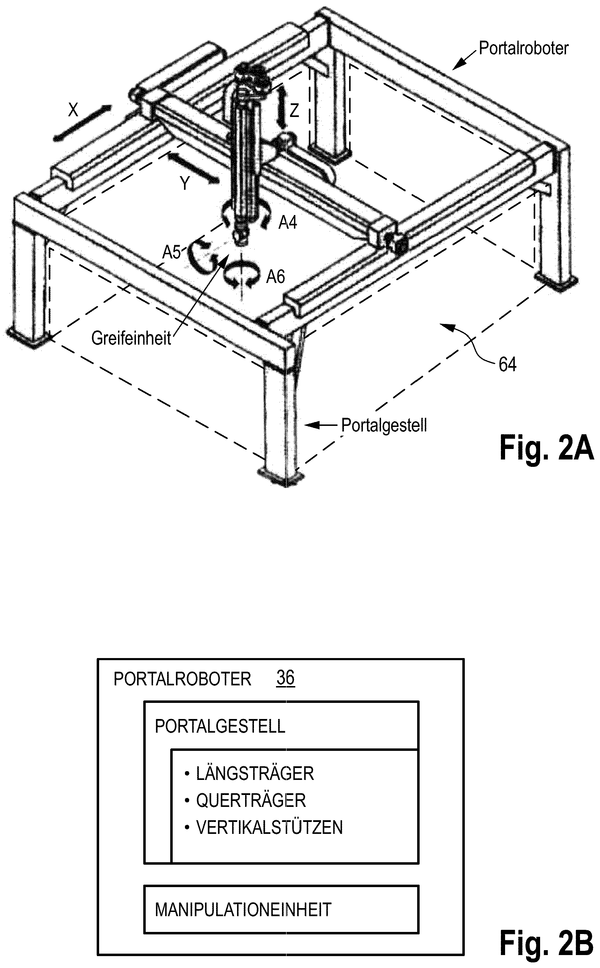

In Fig. 2A ist ein einzelner Portalroboter 36 schematisch veranschaulicht, der ein stationäres (Portal-)Gestell mit z.B. vier stationären Vertikalstützen, zwei stationären Längsträgern und zwei stationären Querträgern aufweist, auf denen ein (in X) beweglicher Querträger gelagert ist, an den ein (in Y) vertikal beweglicher Mast gekoppelt ist. Der Mast ist an einen Schlitten am Querträger gekoppelt. Die drei translatorischen Hauptachsen (A1-A3, nicht gezeigt) sind mit X (Längsrichtung), Z (Querrichtung) und Y (Vertikalrichtung) bezeichnet. Ferner sind in der Fig. 2A drei (optionale) Rotationsachsen A4-A6 für die Greifeinheit bzw. die Manipulationseinheit 37 angedeutet. Die Schlitten für den beweglichen Querträger und den Mast werden typischerweise mit Elektromotoren angetrieben, wobei eine Kraftübertragung z.B. durch Zahnriemen, Zahnstangen oder Spindeln erfolgt. Alternativ können Linearmotor-Direktantriebe, Pneumatikantriebe oder andere Antriebe eingesetzt werden.

Die Fig. 2A zeigt ein Vollportal. Es könnten aber auch Halbportale verwendet werden, die auf nur zwei Vertikalstützen stehen, die ferner (optional) beweglich auf einem Boden gelagert sein könnten. Das Vollportal der Fig. 2A wird auch als Flächenportal bezeichnet, weil eine große horizontale (Grund-)Fläche abgedeckt wird.

Fig. 2B zeigt ein Blockdiagramm des Portalroboters 36.

Der Portalroboter 36 der Fig. 2B weist allgemein das, vorzugsweise stationär angeordnete, Portalgestell und mindestens eine Manipulationseinheit 37 auf. Die Manipulationseinheit 37, die vorzugsweise als Sauggreifer implementiert ist, ist beweglich an das Portalgestell gekoppelt. Die Manipulationseinheit 37 ist automatisiert entlang von mindestens zwei Achsen beweglich. Das Portalgestell überragt die Förderer 38 vertikal (vgl. Fig. 4 und 5), so dass die Artikel 12 mittels der Manipulationseinheit 37 von oben von den Quellpaletten 30, die die (Lager-)Artikel 12 und den palettenartigen Ladungsträger umfassen, aufgenommen und nach unten an die Zielpalette(n) 34 abgegeben werden können.

In der Kommissionierzone 16 werden die Portalroboter 36 also zur Depalettierung bzw. Vereinzelung der Quellpaletten 30 und zur Palettierung bzw. schichtweisen Stapelbildung auf den Zielpaletten 34 eingesetzt, wie es nachfolgend noch näher erläutert werden wird.

Die Quellpaletten 30 sind vorzugsweise typenrein beladen, d.h. auf den Quellpaletten 30 ist immer nur ein einziger Artikeltyp - in einer beliebigen Stückzahl von eins oder mehr - gelagert.

In der Wareneingangszone 18 der Fig. 1, die in Fig. 3 detailliert veranschaulicht ist, werden dem System 10, und insbesondere der Lagerzone 14, (Wareneingangs-)Artikel 12 als Nachschub von außen zugeführt und für eine Einlagerung in die Regale 24 überprüft und vorbereitet (Transportsicherung entfernen, Identifikation und Zählung der Artikel 12, Qualitätsprüfung, etc.). In der Fig. 3 blickt man von hinten auf die Regale 24 der Lagerzone 14 der Fig. 1 (vgl. Pfeil III in Fig. 1).

Die Wareneingangszone 18 kann ein oder mehrere sog. Teach-in-Stationen 39 umfassen, wo z.B. (Außen-) Abmessungen von eingehenden Quellpaletten 30 und den zugehörigen einzelnen Artikeln 12, Identifizierungscodes der Quellpaletten 30 und der darauf gelagerten Artikel 12, eine Stückzahl der Artikel 12 und dergleichen, vorzugsweise automatisiert, erfasst werden.

Die Wareneingangszone 18 ist allgemein über eine Fördertechnik 40, vorzugsweise Stetigförderer (wie z.B. Kettenförderer, Rollenförderer 42, Bandförderer, Elektrohängebahn, Elektrobodenbahn, etc.) an die Lagerzone 14 gekoppelt. In der Fig. 3 tritt die Fördertechnik 40 exemplarisch in einem mittleren Bereich der Lagerzone 14 von hinten in das hintere Regal 24-2 ein, um von beiden (nicht dargestellten) RBG 28 gleich schnell erreichbar zu sein, die die Einlagerung der Wareneingangs-Quellpaletten in die Regale 24 vornehmen.

Alternativ oder ergänzend könnte sich die Fördertechnik 40 bis zu einer oder beiden Stirnseiten der Regale 24 und/oder parallel zur X-Richtung zumindest teilweise innerhalb einem der oder innerhalb beider Regalen 24 erstrecken, um die RBG 28 mit neuen, beladenen Quellpaletten 30 zu versorgen und um alte, leere Paletten zu entsorgen (vgl. Pfeile, die eine Förderrichtung in Fig. 3 veranschaulichen).

Die Teach-in-Station 39 kann ferner optional einen Schwenkarm 44 mit einem Vakuumheber 46, einen Rollentisch 48 zur Ablage und manuellen Prüfung vereinzelter Artikel 12, eine Waage, einen Lichtvorhang 50 und/oder Ähnliches aufweisen, um für jede Wareneingangs-Palette die erforderlichen Daten zu ermitteln, um die Wareneingangs-Palette als Quellpalette 30 zu qualifizieren und zu behandeln.

In der Fig. 1 werden in der Versandzone 20 werden fertig geschichtete bzw. gepackte Zielpaletten 34, d.h. Zielpaletten 34, die alle gemäß einem Auftrag vorgegebenen Artikel 12 in dem durch das entsprechende Packmuster vorgegeben Stapel enthalten, für einen Versand vorbereitet, indem z.B. die auf die Zielpalette 34 geschichteten Flatpack-Artikel 12 mit einer Folie (umfänglich) für eine Transportsicherung umwickelt werden, Versanddaten aufgeklebt werden und Ähnliches (nicht gezeigt). In der Versandzone 20 können fertige Zielpaletten 34 auch gepuffert werden, bis diese das System 10 final verlassen.

Alternativ oder ergänzend können fertige Zielpaletten 34 auch zur direkten Übergabe an einen Endkunden vorbereitet werden, z.B. wenn das System 10 direkt an eine Verkaufsstätte (Filiale) angeschlossen ist, wo die Endkunden Verkaufsgegenstände in einem montierten Zustand in einem separat vorgesehenen Showroom besichtigen und dann als Flatpacks bestellen und mitnehmen können, um die Objekte zuhause selbst zu montieren.

In der Fig. 1 dienen die Zielpaletten-Puffer 22 einem Nachschub von leeren Zielpaletten 34, die vorzugsweise mittels Unstetigförderern (z.B. bemannten Gabelstaplern 52, fahrerlosen Transportfahrzeugen und dergleichen) in oder an die Kommissionierzone 16 transportiert werden, um dort von dem oder den Portalrobotern 36 gemäß den auftragsspezifischen Packmustern mit den zugehörigen Artikeln 12 beladen zu werden.

Fig. 4 zeigt perspektivische Detailansichten (Fig. 4A und 4B) des Systems 10 der Fig. 1 entlang der Pfeile IV-A und IV-B in der Fig. 1. Die Fig. 4 zeigt insbesondere einen Blick in die Kommissionierzone 16, wo die Portalroboter 36 in der Längsrichtung X (direkt) hintereinander und parallel zu einer äußeren Längsseite 54 des ersten Regals 24-1 (vgl. Fig. 1) angeordnet sind. Die Portalroboter 36 und die Kommissionierzone 16 grenzen in der Querrichtung Z direkt an die Lagerzone 14 an. Die Portalroboter 36 grenzen in der Querrichtung Z im Wesentlichen unmittelbar, d.h. direkt, an das Regal 24-1 an und sind hinsichtlich eines Materialflusses (Quellpaletten 30) über die Förderer 38 direkt mit der Lagerzone 14, insbesondere mit dem ersten Regal 24-1, verbunden.

In der Fig. 4 sind eine Vielzahl von Förderern 38 gezeigt, die exemplarisch als Kettenförderer implementiert sind. Die Förderer 38 sind vorzugsweise lineare Stetigförderer, die insbesondere parallel und (minimal) beabstandet zueinander angeordnet sind und die sich im Wesentlichen in der Querrichtung Z erstrecken. Die Förderer 38 sind eingerichtet, die Quellpaletten 30 aus dem Bereich des Regals 24-1 auf einem kürzesten Weg in die Kommissionierzone 16, d.h. in die Aktionsräume der Portalroboter 36, (automatisiert) zu transportieren.

Die Förderer 38 sind vorzugsweise in der untersten Ebene des Regals 24-1 angeordnet. Die unterste Ebene des Regals 24-1 ist vorzugsweise ausschließlich mit den Förderern 38 versehen, zumindest entlang der Kommissionierzone 16, d.h. entlang den Portalrobotern 36. Dies bedeutet ferner, dass auf der untersten Ebene des Regals 24-1 entlang dieses Regalabschnitts keine Lagerplätze 32 vorgesehen sind. Diese Fördertechnikebene stellt eine Transferebene bzw. -zone zwischen der Lagerzone 14 und der Kommissionierzone 16 dar.

Es versteht sich, dass diese Transferzone auch in einer mittleren oder höchsten Ebene des Regals 24 vorgesehen werden kann. Die Ausführungsform der Fig. 4 veranschaulicht eine bodenbasierte Ausführung, bei der die Kommissionierung und der Versand auf dem (Gebäude-) Boden stattfindet. Es versteht sich, dass die Kommissionierung und/oder der Versand auch auf einem anderen Stockwerk des (nicht veranschaulichten) Gebäudes stattfinden kann, in welches das System 10 eingebaut ist. Das Regal 24 erstreckt sich dabei über mehrere Stockwerke und wird über die Förderer 38 horizontal an die Kommissionierzone 16 gekoppelt.

Des Weiteren ist in der Fig. 4 veranschaulicht, dass - in der Längsrichtung X betrachtet - zwei Förderer 38 pro drei Lagerplätzen 32 vorgesehen sind. Dies bedeutet mit anderen Worten, dass anstatt von zwei direkt benachbarten Förderern 38 drei direkt benachbarte Lagerplätze 32 innerhalb des Regals 24 (zwischen zwei benachbarten vertikal Regalstehern) vorgesehen werden könnten. Alternativ könnte ein Verhältnis von 2:1 für das Verhältnis von Lagerplätzen 32 zu Förderern 38 gewählt werden.

Da die Förderer 38 die Portalroboter 36 mit Quellpaletten 30 versorgen, die für eine auftragsspezifische Kommissionierung benötigt werden, ist es bevorzugt, möglichst viele Förderer 38 pro Längsabschnitt des Regals 24 vorzusehen. Die Anzahl der Förderer 38 ist ein Maß für den Durchsatz, d.h. für die Fähigkeit, unterschiedliche Artikel 12 (gemäß den Kommissionieraufträgen) schnell zu den Portalrobotern 36 zu liefern.

Die Quellpaletten 30, die in der linken Hälfte der Aktionsräume der Portalroboter 36 der Fig. 4 positioniert sind, stehen auf Endabschnitten 56 der Förderer 38, die sog. Abgabepositionen 58 (vgl. Fig. 4B) für die Artikel 12 innerhalb der Aktionsräume der Portalroboter 36 definieren. Die in der Fig. 4B unten links dargestellte Quellpalette 30 enthält z.B. zehn Flatpack-Artikel 12, die in zwei Stapeln zu jeweils fünf Stück übereinander geschichtet sind.

Die Quellpaletten 30 stellen generell die Entnahmequellen für die Kommissionierung dar. Die Zielpaletten 34 an den Packpositionen 62 stellen generell die Abgabeziele für die Kommissionierung dar.

Bei den in der Fig. 4B in der linken Hälfte der Aktionsräume der Portalroboter 36 dargestellten Abgabepositionen 58 handelt es sich vorzugsweise um "dynamische" Abgabepositionen. Die dynamischen Abgabepositionen 58 zeichnen sich dadurch aus, dass die Quellpaletten 30 von den Förderern 38 bidirektional bewegt werden können. Dies bedeutet, dass die Quellpaletten 30 zur Entnahme, d.h. Depalettierung durch die Portalroboter 36, in die Abgabepositionen 58 bewegt werden, um anschließend - nach der Entnahme der benötigten Artikel 12 - wieder in die Lagerzone 14 bzw. in das Regal 24 zurückbewegt zu werden.

"Statische" Abgabepositionen 58 zeichnen sich dadurch aus, dass alle Artikel 12 verbraucht werden, bevor der Ladungsträger der zugehörigen Quellpalette 30 entsorgt wird. In der Fig. 4B sind exemplarisch alle Abgabepositionen 58, die in der Längsrichtung X benachbart zu den Packpositionen 62 angeordnet sind und die sich in der rechten Hälfte der Aktionsräume der Portalroboter 36 befinden, als "stationäre" Abgabepositionen implementiert. Die Packpositionen 62 werden z.B. durch Endabschnitte von z.B. Rollenförderern 42 (vgl. Fig. 4A) gebildet, die die Kommissionierzone 14 mit der Versandzone 20 verbinden. Es versteht sich, dass die Packpositionen 62, die zur Bereitstellung der Zielpaletten 34 eingerichtet sind, auch durch Unstetigförderer, wie z.B. die Gabelstapler 52, mit den Zielpaletten 34 versorgt werden können. Die Zielpaletten 34 könnten z.B. auch direkt auf dem Hallenboden abgestellt werden, um die Packpositionen 62 zu definieren.

Die Versorgung der stationären Abgabepositionen 58 mit den Quellpaletten 30 (des Zugriffhäufigkeitstyps A) kann z.B. über einen Verschiebewagen 60 erfolgen, der in der Längsrichtung X schienengeführt verfahrbar ist, um die Quellpaletten 30 dann in der Querrichtung Z abzugeben. Der Verschiebewagen 60 ist ebenfalls ein Unstetigförderer, der über eine weitere Fördertechnik 40' an die (Wareneingangs-) Fördertechnik 40 (vgl. Fig. 3) und/oder im Bereich der Stirnseite der Regale 24 an die RBG 28 gekoppelt sein kann, um die Quellpaletten 30 aus der Lagerzone 14 zu den statischen Abgabepositionen 58 zu transportieren. Vollständig geleerte Quellpaletten 30, d.h. deren Ladungsträger, können mit dem Verschiebewagen 60 entsorgt und durch neue Quellpaletten 30 ersetzt werden.

Die materialflusstechnische Anbindung der stationären Abgabepositionen 58 bzw. solcher Positionen 58, die nicht durch die Förderer 38 realisiert werden, erfolgt vorzugsweise durch - oder unter Einbeziehung von bereits vorhandener - Fördersysteme, wie z.B. der Fördertechnik 40 aus der Wareneinganszone18 oder auch der Gabelstapler 52. Es versteht sich, dass weitere (nicht gezeigte) Fördertechniken (z.B. fahrerlose Transportfahrzeuge, Hängeförderer, etc.) eingesetzt werden könnten.

Der Verschiebewagen 60 kann ferner benutzt werden, um leere Zielpaletten 34 - über z.B. die Rollenförderer 42 - in die Aktionsräume der Portalroboter 36 zu transportieren. Die leeren Zielpaletten 34 werden in diesem Fall in einer Packposition 62 innerhalb der Aktionsräume der Portalroboter 36 positioniert. In der Fig. 4B sind die Packpositionen 62 in der rechten Hälfte des Aktionsraums gezeigt.

Die Versorgung der (dynamischen) Abgabepositionen 58 mit Quellpaletten 30 erfolgt direkt und auf kürzesten Wege aus der Lagerzone 14. Die Versorgung ist vorzugsweise vollständig automatisiert unter Einbindung des oder der RBG 28, die entlang einer Längsseite des Regals 24-1 betrieben werden, die von der Kommissionierzone 16 abgewandt ist. Diese Längsseite (68 in Fig. 5) liegt der in Fig. 4 gezeigten Längsseite 54 in der Z-Richtung gegenüber.

Der Verschiebewagen 60 stellt eine exemplarische Implementierung der fördertechnischen Anbindung der rechten Hälfte der Aktionsräume dar, die auch durch andere Förderertypen (Stetigförderer oder Unstetigförderer) erfolgen könnte, wie oben erwähnt.

Fig. 5 zeigt eine Draufsicht auf eine schematische dargestellte zweite Ausführungsform des Systems 10, das sich nur unwesentlich von dem System 10 der Fig. 1-4 unterscheidet.

Das System 10 der Fig. 5 umfasst exemplarisch ein (einziges) Regal 24 zur Pufferung der Quellpaletten 30 in mehreren Ebenen und exemplarisch einen (einzigen) Portalroboter 36 sowie exemplarisch vier Förderer 38, die das Regal 24 materialflusstechnisch mit dem Aktionsraum des Portalroboters 36 verbindet, dessen Grundfläche in der Fig. 5 durch eine strichpunktierte Linie 64 umrandet ist. Es könnten auch mehr oder weniger Förderer 38 vorgesehen werden.

Die Förderer 38 beginnen wieder im Regal 24 und enden wieder im Aktionsraum des Portalroboters 36. Erste Endabschnitte 55 der Förderer 38, die innerhalb des Regals 24 liegen, definieren die Aufnahmepositionen 66 und die zweiten, gegenüberliegenden Endabschnitte 56 der Förderer definieren wieder die Abgabepositionen 58. Die Förderer 38 werden wieder vorzugsweise bidirektional betrieben. Somit sind jeweils vier Aufnahmepositionen 66-1 bis 66-4 und vier Abgabepositionen 58-1 bis 58-4 gezeigt, die den vier Förderern 38-1 bis 38-4 zugeordnet sind.

An den Aufnahmepositionen 66 werden die Quellpaletten 30 aufgenommen, die aus den Lagerplätzen 32 (nicht gezeigt) des Regals 24 stammen. Die Quellpaletten 30 werden aus der dem Portalroboter 24 abgewandten Längsseite 68 des Regals 24 ausgelagert und in die Aufnahmeplätze 66 hinein bewegt. Die Auslagerung aus den Lagerplätzen 32 und die Abgabe an bzw. die Einlagerung in die Aufnahmepositionen 66 erfolgt vorzugsweise automatisiert durch das RGB 28.

Die Förderer 38 der Fig. 5 sind vorzugsweise lineare Stetigförderer, könnten generell aber auch durch Unstetigförderer (z.B. fahrerlose Transportfahrzeuge, AGV) implementiert sein. Insbesondere sind die Förderer 38 generell voneinander separat vorgesehen.

Eine Länge der Förderer 38 (in der Querrichtung Z) ist so kurz wie möglich gewählt, um wenig Zeit für einen Transport der Quellpaletten 30 zwischen der jeweiligen Aufnahmeposition 66 und der entsprechenden Abgabeposition 58 zu benötigen, so dass dem Portalroboter 36 mehr Quellpaletten 30 pro Zeiteinheit (Durchsatz/Leistung) angedient werden können. Die Förderer 38 bewegen die Quellpaletten 30 automatisiert von den Aufnahmepositionen 66 in die entsprechenden Abgabepositionen 58, wo die Artikel 12 (nicht dargestellt) an den Portalroboter 36 zur Kommissionierung abgegeben werden. Der Portalroboter 36 bewegt seinen Querträger in der Längsrichtung X zur entsprechenden Abgabeposition 58, bewegt die Manipulationseinheit 37 mittels des Schlittens in der Querrichtung Z direkt über den gewünschten Artikel 12, senkt die Manipulationseinheit 37 ab, ergreift den (einzelnen) Artikel 12, hebt diesen vertikal an und bewegt die Manipulationseinheit 37 in der Längs- und Querrichtung zur Packposition 62, wo die zugehörige Zielpalette 34 gepuffert ist, um den Artikel 12 dort an der durch das Packmuster vorgegebenen Position und in der entsprechenden Ausrichtung vertikal abzusetzen.

Die Transportzeit der Quellpaletten 30 wird also im Wesentlichen durch einen Abstand zwischen dem Regal 24 und dem Portalroboter 36 bestimmt. Vorzugsweise wird der Portalroboter 36 in der Z-Richtung also direkt an das Regal 24 angrenzend angeordnet. Der Portalroboter 36 grenzt unmittelbar an die Längsseite 54 des Regals 24 an, die dem Portalroboter 36 zugewandt ist.

Der Portalroboter 36 kann sich auch am Regal 24 abstützen. Teile des Portalgestells können z.B. durch den Regalbau implementiert sein. In der Fig. 5 ist das Portalgestell aber vom Regalbau getrennt vorgesehen.

Die senkrechte Orientierung und gleichmäßige Verteilung der Förderer 38 über die Längsseite 54 des Regals erhöht die Anzahl der Abgabepositionen 58 innerhalb des Aktionsraums des Portalroboters 36. Dies bedeutet, dass mehr unterschiedlich beladene Quellpaletten 39 gleichzeitig beim Portalroboter 36 zur Kommissionierung bereitstellbar sind. Auf diese Weise kann die Kommissionierzeit ebenfalls verringert werden. Der Portalroboter 36 muss nicht auf die Bereitstellung weiterer Quellpaletten 30 warten, die zur Bearbeitung eines Auftrags benötigt werden.

Außerdem erhöht eine große Anzahl von Abgabepositionen 58 die Möglichkeit für eine sequenzierte Bereitstellung der Quellpaletten 30. Die auftragsspezifischen Packmuster erfordern die Bereitstellung der Artikel 12 in einer vorab bestimmten Reihenfolge. Schwere und/oder große Artikel 12 werden vorzugsweise in einem unteren Teil des Packmuster angeordnet, während leichte und/oder kleine Artikel 12 vorzugsweise in einem oberen Teil des auf der Zielpalette 34 zu bildenden Artikelstapels positioniert werden. Die Reihenfolge der Bereitstellung der entsprechenden Quellpaletten 30 an den Abgabepositionen 58 ist also relevant.

Zwar könnte man die Förderer 38 auch aus den Stirnseiten 70 des Regals 24 austreten lassen. In diesem Fall stünde aber nur eine einzige Aufnahmeposition 66 innerhalb des Regals 24 zur Verfügung, was den Durchsatz mindert. Diese eine Aufnahmeposition 66 würde einen "Flaschenhals" für das RBG 28 darstellen, weil dort keine Quellpaletten 30 vorübergehend geparkt werden können, wie es in der Anordnung der Fig. 5 aber der Fall ist. Außerdem würde sich ein Verlauf der Förderer 38 vom Regal 24 zum Portalroboter 36 komplexer gestalten, da Weichen und Kreuzungen eingesetzt werden müssten, um in entsprechend vielen Abgabepositionen 58 zu enden, wie es in Fig. 5 gezeigt ist.

In der Fig. 5 sind exemplarisch zwei Packpositionen 62-1 und 62-2 gezeigt, die ein tischartiges Gestell und optional auch Fördermittel aufweisen können, um die leere Zielpaletten 34 an vorab bestimmten Orten bereitzustellen, die mit der Packposition 62 übereinstimmen.

Während der Portalroboter 36 den Artikel 12 zur Zielpalette 34 bewegt, kann die Quellpalette 30 schon wieder in das Regal 24 zurück bewegt werden, indem die Quellpalette 30 in die Aufnahmeposition 66 bewegt wird, dort vom RBG 28 abgeholt wird und an den alten (oder alternativ an einen neuen) Lagerplatz 32 transferiert wird.

In der Fig. 5 sind die entsprechenden Bewegungen durch Pfeile angedeutet.

Die Abgabepositionen 58-1 bis 58-4 werden dynamisch betrieben, wobei vorzugsweise Artikel 12 der Zugriffshäufigkeit B und C angedient werden. Die Abgabepositionen 58-5 und 58-6, die in der Längsrichtung X außen benachbart zu den Packpositionen 62-1 und 62-2 angeordnet sind, werden statisch betrieben. Dies bedeutet, die Quellpaletten 30 verbleiben so lang dort, bis alle Artikel 12 entnommen wurden und diese Quellpaletten 30 "leer" sind. Diese Quellpaletten 30 werden nicht ins Regal 12 zurück gelagert. Die Quellpaletten 30 auf statischen Abgabepositionen enthalten vorzugsweise Artikel 12 der Zugriffshäufigkeit A.

Auf der Seite der (dynamischen) Abgabepositionen 58-1 bis 58-4 werden aus den oben genannten Gründen vorzugsweise keine Packpositionen 62 angeordnet. Die Packposition(en) 62 werden vorzugsweise (in der Querrichtung Z) gegenüberliegend zu den Abgabepositionen 58-1 bis 58-4 angeordnet.

In der Fig. 5 sind die Abgabepositionen 58-1 bis 58-4 in der Querrichtung Z beabstandet zu den Packpositionen 62 angeordnet, um dazwischen einen (optional vorgesehenen) Abführförderer 72 aufzunehmen, der verwendet werden kann, um Zwischenlagen (z.B. Kartons), die zwischen Artikellagen auf den Quellpaletten 30 verwendet werden, aus dem Aktionsraum zu entfernen. Der Abführförderer 70 kann auch zum Entfernen von Leerpaletten, z.B. mit der Manipulationseinheit 37, eingesetzt werden, die auf den statischen Abgabepositionen 58-5 und 58-6 geleert wurden, um Platz für neue Quellpaletten 30 zu schaffen.

Es versteht sich, dass die Positionen 58-1 bis 58-4 auch ohne Abstand in der Z-Richtung zu den Positionen 58-5, 58-6, 62-1 und 62-2 angeordnet werden können, um die Kommissionierzone 16 klein zu halten (verringerter Flächenbedarf).

Die dynamischen Abgabepositionen 58-1 bis 58-4 sind in der Anordnung der Fig. 5 vorzugsweise "oberhalb" des Förderers 72 und die statischen Abgabepositionen 58-5 und 58-6 sowie die Packpositionen 62-1 und 62-2 sind vorzugsweise "unterhalb" des Förderers 72 positioniert. Dies hat den Vorteil, dass sich die Materialflüsse der Abgabepositionen 58 und der Packpositionen 62 wenig oder gar nicht mischen, was in einem erhöhten Durchsatz resultiert.

Es versteht sich, dass in der Fig. 5 mehr oder weniger Packpositionen 62 als gezeigt eingesetzt werden können. Ferner versteht es sich, dass die Abgabepositionen 58-1 bis 58-4 auch statisch betrieben werden können und/oder die Abgabepositionen 58-5 und 58-6 auch dynamisch betrieben werden können. Die Abgabepositionen 58-5 und 58-6 können auch weggelassen werden oder durch weitere Packpositionen 62 ersetzt werden. Die Grundfläche des Aktionsraums, insbesondere dessen Länge in der X-Richtung, kann vergrößert oder verkleinert werden, um mehr oder weniger Positionen 58 und/oder 62 zu definieren.

Generell weist jedes System 10 ferner eine Steuerung 74 auf, die den Materialfluss steuert und die ferner vorzugsweise eingerichtet ist, das Packmuster zu bestimmen. Die Steuerung wertet dazu die Aufträge und/oder das Packmuster aus und erzeugt entsprechende Transportaufträge, um die erforderlichen Bewegungen der Quellpaletten 30 und Zielpaletten 34 unter Einsatz der Fördertechnik (z.B. RBG 28, Förderer 38, Rollenförderer 42, Gabelstapler 52, Verschiebewagen 60, etc.) zu veranlassen.

Es versteht sich, dass die Planungssoftware für das Packmuster auch auf einem Computer ausgeführt werden kann, der separat zur Steuerung 74 vorgesehen ist. Die Steuerung 74 bestimmt in diesem Fall die Quellpaletten 30, die für den Stapel benötigt werden, aus den Daten, die von der Planungssoftware erhalten werden, vorzugsweise über einen Artikel-Identifikator.

Die Fig. 5 veranschaulicht also eine "Kommissionierzelle", die durch einen Abschnitt des Regals 24 und den zugehörigen Portalroboter 36 bzw. dessen Aktionsraum gebildet wird, der direkt gegenüber liegend zum Regalabschnitt angeordnet ist und der über mehrere der Förderer 38, die durch das Regal 24 bzw. den entsprechenden Abschnitt des Regals 24 tunneln, direkt mit dem Regal 24 verbunden ist.

Es versteht sich, dass mehrere dieser Kommissionierzellen direkt benachbart, oder auch beabstandet, entlang einer oder beider Längsseiten des Regals 24 angeordnet werden können.

Ferner versteht es sich, dass im Allgemeinen jeder der Portalroboter 36 einen eigenen Aktionsraum definiert, der üblicherweise durch das Portalgestell begrenzt ist. Wenn mehrere Portalroboter 36 direkt benachbart zu einander angeordnet sind, können diese sich ein (einziges) Portalgestell teilen. In diesem Fall wird jeder der Portalroboter 36 im Wesentlichen durch seine Manipulationseinheit 37 und den zugehörigen Querträger geprägt, der in der X-Richtung auf dem Portalgestell beweglich ist. Die Bewegungen können überlappend erfolgen, d.h. bestimmte Bereiche des (gemeinsamen) Portalgestells können von mehreren Querträgern (zeitlich versetzt) erreicht werden. Dies bedeutet, dass sich die Aktionsräume überlappen können. Die Grenzen der Aktionsräume sind in diesem Fall nicht starr, wie sonst üblich, sondern dynamisch.

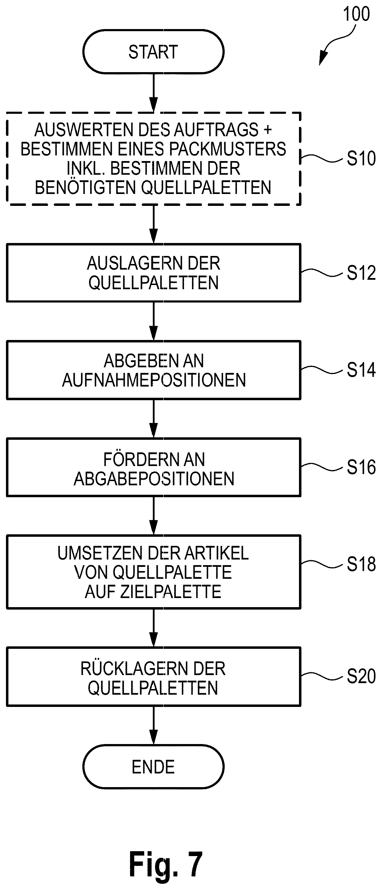

Fig. 7 zeigt ein Flussdiagramm eines Verfahrens 100 zum Kommissionieren der Artikel 12 gemäß Kommissionieraufträgen.

In einem ersten optionalen Schritt S10 wird der Auftrag mittels der Steuerung 74 und/oder des separaten Computers ausgewertet, um das Packmuster sowie die dazu benötigten Quellpaletten 30 zu bestimmen.

In einem Schritt S12 werden die entsprechenden Quellpaletten 30 ausgelagert, wie oben beschrieben.

In einem Schritt S14 werden die ausgelagerten Quellpaletten 30 an die Aufnahmepositionen 66 abgegeben, wie oben beschrieben.

In einem Schritt S16 werden die abgegebenen Quellpaletten 30 an die entsprechenden Aufnahmepositionen 58 mittels der Förderer 38 gefördert.

In einem Schritt S18 werden die Artikel 12 mittels des Portalroboters 36 von den Quellpaletten 30 auf die Zielpalette 34 umgesetzt. Der Schritt des Umsetzens S18 umfasst das Aufnehmen der Artikel 12 von den Quellpaletten 30 an den Aufnahmepositionen 58, das Bewegen der aufgenommenen Artikel 12 an eine durch das Packmuster vorgegebene Position auf der Zielpalette 34, sowie vorab ggf. eine entsprechende Ausrichtung des Artikels 12, und ein Packen des aufgenommenen Artikels 12 auf die Zielpalette gemäß dem Packmuster.

In einem optionalen Schritt S20 werden die Quellpaletten 30 zurückgelagert, die während der vorhergehenden Kommissionierung nicht geleert wurden. Diese Quellpaletten 30 sitzen auf den oben erwähnten dynamischen Aufnahmepositionen 58.

Fertige Zielpaletten 34 können anschließend in die Versandzone 20 transportiert werden (nicht dargestellt).

Danach endet das Verfahren 100.

### Bezugszeichenliste

| | | | |
|---|---|---|---|
| 10 | Kommissioniersystem | 72 | Abführförderer |
| 12 | (Flatpack-) Artikel | | |
| 14 | Lagerzone | | |
| 16 | Kommissionierzone | | |
| 18 | Wareneingangszone | | |
| 20 | Versandzone | | |
| 22 | Zielpalettenpuffer | | |
| 24 | Regal | | |
| 26 | Regalgasse | | |
| 28 | Regalbediengerät | | |
| 30 | Quellpalette | | |
| 32 | Lagerplatz | | |
| 34 | Zielpalette | | |
| 36 | Portalroboter | | |
| 38 | Förderer | | |
| 39 | Track-in-Station | | |
| 40, 40' | Fördertechnik | | |
| 42 | Rollenförderer | | |
| 44 | Schwenkarm | | |
| 46 | Vakuumheber | | |
| 48 | Rollentisch | | |
| 50 | Lichtvorhang | | |
| 52 | Gabelstapler | | |
| 54 | Längsseite | | |
| 55, 56 | Endabschnitte von 38 | | |
| 58 | Abgabeposition | | |
| 60 | Verschiebewagen | | |
| 62 | Packposition | | |
| 64 | Aktionsraum | | |
| 66 | Aufnahmeposition | | |
| 68 | Längsseite von 24 | | |
| 70 | Stirnseite von 24 | | |

## Patentansprüche

1. System (10) zum Kommissionieren von Artikeln (12) gemäß Kommissionier-Aufträgen, wobei das System (10) aufweist:
ein Regal (24), das sich entlang einer Längs- und Höhenrichtung (X, Y) des Systems (10) erstreckt und das eine Vielzahl von Lagerplätzen (30) aufweist, die eingerichtet sind, Quellpaletten (30) zu lagern;
einen Portalroboter (36) mit einer Manipulationseinheit (37), der eingerichtet ist, die Artikel (12) umzusetzen;
eine Packposition (62), die zur Pufferung einer Zielpalette (34) eingerichtet ist;
eine Vielzahl von Förderern (38); und
eine Steuerung (74);
wobei für jeden der Aufträge ein auftragsspezifisches Packmuster bestimmt ist, um durch den Portalroboter (36) mehrere der Artikel (12) gemäß dem jeweiligen Auftrag von einer oder mehreren der Quellpaletten (30) automatisiert auf eine Zielpalette (34) in der Packposition (62) zu packen;
wobei jeder der Förderer (38) eine Aufnahmeposition (66), die innerhalb des Regals (24) positioniert ist und die zur Aufnahme der Quellpaletten (30) eingerichtet ist, sowie eine Abgabeposition (58) aufweist, die innerhalb eines Aktionsraums des Portalroboters (36) positioniert ist und die zur Bereitstellung der Quellpaletten (30) eingerichtet ist;
wobei der Portalroboter (36) den Aktionsraum definiert, innerhalb welchem die Manipulationseinheit (37) beweglich ist und der die Packposition (62) und die Abgabepositionen (58) der Förderer (38) enthält; und
wobei die Steuerung (74) eingerichtet ist, zu veranlassen, dass solche der Quellpaletten (30) von den Lagerplätzen (32) über die Aufnahmepositionen (66) der Förderer (38) zu den Abgabepositionen (58) der Förderer (38) transportiert werden, die die Artikel (12) umfassen, die zum Packen gemäß dem jeweiligen auftragsspezifischen Packmuster benötigt werden.

2. System (10) nach Anspruch 1, wobei die Artikel (12) Flatpack-Artikel sind.

3. System (10) nach Anspruch 1 oder 2, wobei die Abgabeposition zur dynamischen Bereitstellung der Quellpaletten (30) eingerichtet ist.

4. System (10) nach einem der Ansprüche 1 bis 3, wobei der Portalroboter (36) unmittelbar an eine Längsseite (54) des Regals (24) angrenzt.

5. System (10) nach einem der Ansprüche 1 bis 4, wobei die Förderer (38) lineare Stetigförderer sind, die
bidirektional betreibbar sind,
senkrecht, vorzugsweise horizontal senkrecht, zur Längsrichtung (X) orientiert sind, und
die Aufnahmepositionen (66) und die Abgabepositionen (58) an ihren Enden aufweisen.

6. System (10) nach einem der Ansprüche 1 bis 5, das ferner mindestens ein Regalbediengerät (28) aufweist, das eingerichtet ist, die Quellpaletten (30) automatisiert zwischen den Lagerplätzen (32) und den Aufnahmeplätzen (66) auszutauschen, und das vorzugsweise an eine Längsseite (68) des Regals (24) angrenzt, die von dem Portalroboter (36) abgewandt ist.

7. System (10) nach einem der Ansprüche 1 bis 6, das ferner weitere Abgabepositionen (58-5, 58-6) aufweist, die ebenfalls innerhalb des Aktionsraums positioniert sind und die zur statischen Bereitstellung der Quellpaletten (30) eingerichtet sind.

8. System (10) nach Anspruch 7, wobei zumindest einige, und vorzugsweise alle, der weiteren Abgabepositionen (58-5, 58-6) an einen Versorgungsförderer gekoppelt sind, der sich von den Förderern (38) unterscheidet.

9. System (10) nach Anspruch 8, wobei alle der weiteren Abgabepositionen an den Versorgungsförderer gekoppelt sind.

10. System (10) nach Anspruch 8 oder 9, wobei der Versorgungsförderer einen Verschiebewagen (62) umfasst.

11. System (10) nach einem der Ansprüche 1 bis 10, das ferner einen Abführförderer (72) umfasst.

12. System nach Anspruch 11, wobei der sich Abführförderer parallel zur Längsrichtung (X) und mittig durch den Aktionsraum erstreckt.

13. System nach einem der Ansprüche 1 bis 12, wobei die Förderer (38) auf einem Bodenniveau des Systems (10) angeordnet sind.

14. System nach einem der Ansprüche 1 bis 13, wobei eine Ebene des Regals (24) ausschließlich mit den Förderern (38) versehen ist.

15. System (10) nach Anspruch 14, wobei mehrere der Portalroboter (36) in der Längsrichtung (X) unmittelbar benachbart zueinander angeordnet sind, wobei für jeden der Portalroboter (36) zumindest eine eigene Packposition (62) vorgesehen ist.

16. System (10) nach einem der Ansprüche 1 bis 15, wobei ein Verhältnis zwischen einer Anzahl der Förderer (38) und einer Anzahl der Lagerplätze entlang der Längsrichtung (X) 1:2 oder 2:3 beträgt.

17. System (10) nach einem der Ansprüche 1 bis 16, wobei der Portalroboter (36) eingerichtet ist, innerhalb des Aktionsraums die Quellpaletten (30) zu depalettieren und die Zielpaletten zu palettieren (34).

18. System (10) nach Anspruch 2 und nach einem der Ansprüche 2 bis 17, wobei jeder der Flatpack-Artikel (12):
rechteckig plattenförmig ist;
insbesondere Außenmaße in einem Bereich von 620x300x7 mm3 bis 2550x800x200 mm3 hat;
vorzugsweise maximal 62 kg wiegt; und/oder
vorzugsweise geschichtete Einzelteile eines montagefertigen Möbelstücks beinhaltet.

19. Verfahren zum Kommissionieren von Artikeln (12) gemäß KommissionierAufträgen, das die Schritte aufweist:
Auslagern von Quellpaletten (30), die die Artikel (12) speichern, die zum Packen gemäß einem auftragsspezifischen Packmuster auf einer Zielpalette (34) benötigt werden, aus Lagerplätzen (32) eines Regals (24) gemäß dem Packmuster;
Abgeben der auslagerten Quellpaletten (30) an Aufnahmepositionen (66) von Förderern (38), wobei die Aufnahmepositionen (66) innerhalb des Regals (12) angeordnet sind, wobei sich die Förderer (38) vom Regal (12) bis zu einem Portalroboter (36) erstrecken, der entlang einer Längsseite (54) des Regals (12) seitlich angrenzend an das Regal (12) angeordnet ist;
Transportieren, mit den Förderern (38), der abgegebenen Quellpaletten (30) von den Aufnahmepositionen (66) zu entsprechenden Abgabepositionen (58) der Förderer (38), die innerhalb eines Aktionsraums des Portalroboters (36) positioniert sind; und
Umsetzen der Artikel (12), die zum Packen gemäß dem Packmuster auf die Zielpalette (34) benötigt werden, mit einer Manipulationseinheit (37) des Portalroboters (36), wobei die Zielpalette (34) an einer Packposition (62) innerhalb des Aktionsraums des Portalroboters (36) vorgesehen ist.

20. Verfahren nach Anspruch 19, wobei das Umsetzen der Artikel (12) aufweist:
Aufnehmen der Artikel (12) von den Quellpaletten (30) an den Abgabepositionen (58);
Bewegen der aufgenommen Artikel (12) an eine durch das jeweilige auftragsspezifische Packmuster vorgegebene Position auf der Zielpalette (34); und
Packen der aufgenommen Artikel (12) auf die Zielpalette (34) gemäß dem jeweiligen auftragsspezifischen Packmuster.

21. Verfahren nach Anspruch 19 oder 20, das ferner aufweist:
Bestimmen, mittels einer Steuerung (74) oder eines Computers, des jeweiligen auftragsspezifischen Packmusters für jeden Auftrag einschließlich der Quellpaletten (30), die solche der Artikel (12) speichern, die zum Packen gemäß dem jeweiligen auftragsspezifischen Packmuster auf die Zielpalette (34) benötigt werden.

## Claims

1. A system (10) for picking articles (12) in accordance with picking orders, wherein the system (10) comprises:
a rack (24) extending along longitudinal and height directions (X, Y) of the system (10) and comprising a plurality of storage locations (30) configured to store source pallets (30);
a gantry robot (36) including a manipulation unit (37) configured to transfer the articles (12);
a packing position (62) configured to buffer a target pallet (34);
a plurality of conveyors (38); and
a control (74);
wherein for each of the orders an order-specific packing pattern is determined for automatically packing, by the gantry robot (36), several of the articles (12) in accordance with the respective order from one or more of the source pallets (30) on a target pallet (34) in the packing position (62);
wherein each of the conveyors (38) comprises a receiving position (66), which is positioned within the rack (24) and configured to receive the source pallets (30), as well as a delivering position (58), which is positioned within an action space of the gantry robot (36) and configured to provide the source pallets (30);
wherein the gantry robot (36) defines the action space, within which the manipulation unit (37) is movable and which contains the packing position (62) and the delivering positions (58) of the conveyors (38); and
wherein the control (74) is further configured to cause that such of the source pallets (30) are transported from the storage locations (32) via the receiving positions (66) of the conveyors (38) to the delivering positions (58) of the conveyors (38), which include the articles (12) required for the packing in accordance with the respective packing pattern.

2. The system (10) of claim 1, wherein the articles (12) are flat-pack articles.

3. The system (10) of claim 1 or 2, wherein the delivering position is configured to provide the source pallets (30) dynamically.

4. The system (10) of any of claims 1 to 3, wherein the gantry robot (36) is directly adjacent to a longitudinal side (54) of the rack (24).

5. The system (10) of any of claims 1 to 4, wherein the conveyors (38) are linear continuous conveyors, which
are operable bidirectionally,
oriented perpendicular, preferably horizontal perpendicular, relative to the longitudinal direction (X), and
comprise the receiving positions (66) and the delivering positions (58) at ends thereof.

6. The system (10) of any of claims 1 to 5, further comprising at least one storage and retrieval device (28) configured to automatically exchange the source pallets (30) between the storage locations (32) and the receiving locations (66), and preferably being adjacent to a longitudinal side (68) of the rack (24) facing away from the gantry robot (36).

7. The system (10) of any of claims 1 to 6, further comprising further delivering positions (58-5, 58-6), which are also positioned within the action space and configured to statically provide the source pallets (30).

8. The system (10) of claim 7, wherein at least some, and preferably all, of the further delivering positions (58-5, 58-6) are coupled to a supplying conveyor, which is different to the conveyors (38).

9. The system (10) of claim 8, wherein all of the further delivering positions are coupled to the supplying conveyor.

10. The system (10) of claim 8 or 9, wherein the suppling conveyor includes a transfer carriage (62).

11. The system (10) of any of claims 1 to 10, further including a discharging conveyor (72).

12. The system (10) of claim 11, wherein the discharging conveyor extends parallel to the longitudinal direction (X) and centrally through the action space.

13. The system of any of claims 1 to 12, wherein the conveyors (38) are arranged on a floor level of the system (10).

14. The system of any of claims 1 to 13, wherein one level of the rack (24) is exclusively provided with the conveyors (38).

15. The system (10) of claim 14, wherein several of the gantry robot (36) are arranged directly adjacent to each other in the longitudinal direction (X), wherein at least one separate packing position (62) is provided for each of the gantry robots (36).

16. The system (10) of any of claims 1 to 15, wherein a ratio between a number of conveyors (38) and a number of the storage locations along the longitudinal direction (X) is 1:2 or 2:3.

17. The system (10) of any of claims 1 to 16, wherein the gantry robot (36) is configured to depalletize the source pallets (30) and to palletize the target pallets (34) within the action space.

18. The system (10) of claim 2 and any of claims 2 to 17, wherein each of the flat-pack articles (12):
is rectangular plate-shaped;
in particular has outer dimensions in a range of 620x300x7 mm3 to 2550x800x200 mm3;
preferably weighs 62 kg at maximum; and/or
preferably contains stacked individual parts of a piece of furniture being ready-to-assemble.

19. A method for picking articles (12) in accordance with picking orders comprising the steps of:
retrieving source pallets (30), which store the articles (12) required for packing on a target pallet (34) in accordance with an order-specific packing pattern, from storage locations (32) of a rack (24) in accordance with the packing pattern;
delivering the retrieved source pallets (30) to receiving positions (66) of conveyors (38), wherein the receiving positions (66) are arranged within the rack (12), wherein the conveyors (38) extend from the rack (12) to a gantry robot (36) arranged along a longitudinal side (54) of the rack (12) laterally adjacent to the rack (12);
transporting, by the conveyors (38), the delivered source pallets (30) from the receiving positions (66) to corresponding delivering positions (58) of the conveyors (38), which are positioned within an action space of the gantry robot (36); and
transferring the articles (12), which are required for the packing on the target pallet (34) in accordance with the packing pattern, by a manipulation unit (37) of the gantry robot (36), wherein the target pallet (34) is provided at a packing position (62) within the action space of the gantry robot (36).

20. The method of claim 19, wherein the transferring of the articles (12) comprises:
receiving the articles (12) from the source pallets (30) at the delivering positions (58);
moving the received articles (12) to a position on the target pallet (34) given by the respective order-specific packing pattern; and
packing the received articles (12) on the target pallet (34) in accordance with the respective order-specific packing pattern.

21. The method of claim 19 or 20, further comprising:
determining, by means of a control (74) or a computer, the respective order-specific packing pattern for each order including the source pallets (30) storing such of the articles (12), which are required for the packing on the target pallet (34) in accordance with the respective order-specific packing pattern.

## Revendications

1. Système (10) pour la préparation de commandes d'articles (12) selon des ordres de préparation de commandes, dans lequel le système (10) présente :
un rayonnage (24) qui s'étend le long d'une direction longitudinale et d'une direction verticale (X, Y) du système (10) et qui présente une pluralité d'emplacements de stockage (30) qui sont conçus pour stocker des palettes sources (30) ;
un robot portique (36) comportant une unité de manipulation (37) et qui est conçu pour déplacer les articles (12) ;
une position d'emballage (62) conçue pour le stockage temporaire d'une palette cible (34) ;
une pluralité de transporteurs (38) ; et
un dispositif de commande (74) ;
dans lequel un modèle d'emballage spécifique à l'ordre est déterminé pour chaque ordre afin d'emballer de manière automatisée dans la position d'emballage (62) plusieurs des articles (12) selon l'ordre respectif provenant d'une ou plusieurs des palettes sources (30) sur une palette cible (34) par le robot portique (36) ;
dans lequel chacun des transporteurs (38) présente une position de réception (66) positionnée à l'intérieur du rayonnage (24) et conçue pour recevoir les palettes sources (30), ainsi qu'une position de distribution (58) positionnée à l'intérieur d'un espace d'action du robot portique (36) et conçue pour mettre à disposition les palettes sources (30) ;
dans lequel le robot portique (36) définit l'espace d'action à l'intérieur duquel l'unité de manipulation (37) est mobile et contient la position d'emballage (62) et les positions de distribution (58) des transporteurs (38) ; et
dans lequel le dispositif de commande (74) est configuré pour provoquer le transport de palettes sources (30) depuis les emplacements de stockage (32), par l'intermédiaire des positions de réception (66) des transporteurs (38), jusqu'aux positions de distribution (58) des transporteurs (38), lesquelles palettes sources comprennent les articles (12) nécessaires à l'emballage selon le modèle d'emballage respectif spécifique à l'ordre.

2. Système (10) selon la revendication 1, dans lequel les articles (12) sont des articles à emballage plat.

3. Système (10) selon la revendication 1 ou 2, dans lequel la position de distribution est conçue pour mettre à disposition de manière dynamique les palettes sources (30).

4. Système (10) selon l'une des revendications 1 à 3, dans lequel le robot portique (36) est directement adjacent à un côté longitudinal (54) du rayonnage (24).

5. Système (10) selon l'une des revendications 1 à 4, dans lequel les transporteurs (38) sont des transporteurs continus linéaires qui peuvent fonctionner de manière bidirectionnelle, sont orientés perpendiculairement, de préférence horizontalement et perpendiculairement, à la direction longitudinale (X), et
présentent les positions de réception (66) et les positions de distribution (58) au niveau de leurs extrémités.

6. Système (10) selon l'une des revendications 1 à 5, présentant en outre au moins un gerbeur (28) qui est conçu pour échanger de manière automatisée les palettes sources (30) entre les emplacements de stockage (32) et les emplacements de réception (66), et qui est de préférence adjacent à un côté longitudinal (68) du rayonnage (24) qui est opposé au robot portique (36).

7. Système (10) selon l'une des revendications 1 à 6, présentant en outre d'autres positions de distribution (58-5, 58-6) qui sont également positionnées à l'intérieur de l'espace d'action et qui sont conçues pour mettre à disposition de manière statique les palettes sources (30).

8. Système (10) selon la revendication 7, dans lequel au moins certaines des autres positions de distribution (58-5, 58-6), et de préférence toutes, sont accouplées à un transporteur d'alimentation qui est différent des transporteurs (38).

9. Système (10) selon la revendication 8, dans lequel toutes les autres positions de distribution sont accouplées au transporteur d'alimentation.

10. Système (10) selon la revendication 8 ou 9, dans lequel le transporteur d'alimentation comprend un chariot de coulissement (62).

11. Système (10) selon l'une des revendications 1 à 10, comprenant en outre un transporteur d'évacuation (72).

12. Système selon la revendication 11, dans lequel le transporteur d'évacuation s'étend parallèlement à la direction longitudinale (X) et de manière centrale à travers l'espace d'action.

13. Système selon l'une des revendications 1 à 12, dans lequel les transporteurs (38) sont disposés sur un niveau formant fond du système (10).

14. Système selon l'une des revendications 1 à 13, dans lequel un plan du rayonnage (24) est exclusivement pourvu des transporteurs (38).

15. Système (10) selon la revendication 14, dans lequel plusieurs des robots portiques (36) sont disposés directement à proximité les uns des autres dans la direction longitudinale (X), dans lequel au moins une position d'emballage (62) propre est prévue pour chacun des robots portiques (36).

16. Système (10) selon l'une des revendications 1 à 15, dans lequel un rapport entre un nombre de transporteurs (38) et un nombre d'emplacements de stockage le long de la direction longitudinale (X) est de 1:2 ou 2:3.

17. Système (10) selon l'une des revendications 1 à 16, dans lequel le robot portique (36) est conçu pour dépalettiser les palettes sources (30) et palettiser les palettes cibles (34) à l'intérieur de l'espace d'action.

18. Système (10) selon la revendication 2 et selon l'une des revendications 2 à 17, dans lequel chacun des articles à emballage plat (12) :
est en forme de plaque rectangulaire ;
possède en particulier des dimensions extérieures comprises dans une plage allant de 620 x 300 x 7 mm3 à 2550 x 800 x 200 mm3 ;
pèse de préférence 62 kg au maximum ; et/ou
comprend de préférence des pièces séparées stratifiées d'un article d'ameublement prêt à être assemblé.

19. Procédé permettant la préparation de commandes d'articles (12) selon des ordres de préparation de commandes, présentant les étapes consistant à :
déstocker des palettes sources (30), lesquelles stockent les articles (12) nécessaires à l'emballage selon un modèle d'emballage spécifique à l'ordre sur une palette cible (34), depuis des emplacements de stockage (32) d'un rayonnage (24) selon le modèle d'emballage ;
distribuer les palettes sources (30) déstockées au niveau de positions de réception (66) de transporteurs (38), dans lequel les positions de réception (66) sont disposées à l'intérieur du rayonnage (12), dans lequel les transporteurs (38) s'étendent depuis le rayonnage (12) jusqu'à un robot portique (36) disposé le long d'un côté longitudinal (54) du rayonnage (12), lequel côté longitudinal est latéralement adjacent au rayonnage (12) ;
transporter, avec les transporteurs (38), les palettes sources (30) distribuées depuis les positions de réception (66) jusqu'à des positions de distribution (58) correspondantes des transporteurs (38) qui sont positionnées à l'intérieur d'un espace d'action du robot portique (36) ; et
déplacer les articles (12) nécessaires à l'emballage selon le modèle d'emballage sur la palette cible (34) avec une unité de manipulation (37) du robot portique (36), dans lequel la palette cible (34) est prévue à une position d'emballage (62) à l'intérieur de l'espace d'action du robot portique (36).

20. Procédé selon la revendication 19, dans lequel le déplacement des articles (12) présente :
la réception des articles (12) provenant des palettes sources (30) au niveau des positions de distribution (58) ;
le mouvement des articles (12) reçus vers une position sur la palette cible (34) prédéfinie par le modèle d'emballage respectif spécifique à l'ordre ; et
l'emballage des articles (12) reçus sur la palette cible (34) selon le modèle d'emballage respectif spécifique à l'ordre.

21. Procédé selon la revendication 19 ou 20, présentant en outre :
la détermination, au moyen d'un dispositif de commande (74) ou d'un ordinateur, du modèle d'emballage respectif spécifique à l'ordre pour chaque ordre comportant les palettes sources (30) qui stockent des articles (12) qui sont nécessaires à l'emballage sur la palette cible (34) selon le modèle d'emballage respectif spécifique à l'ordre.
